(19) Europäisches Patentamt
European Patent Office
Office européen des brevets

(11) **EP 3 429 211 A1**

(12) **EUROPEAN PATENT APPLICATION**

(43) Date of publication:
**16.01.2019 Bulletin 2019/03**

(51) Int Cl.:
*H04N 19/96* [(2014.01)]   *H04N 19/597* [(2014.01)]
*G06T 17/00* [(2006.01)]   *G06T 17/10* [(2006.01)]
*G06T 9/40* [(2006.01)]   *H04N 19/20* [(2014.01)]

(21) Application number: **17305928.8**

(22) Date of filing: **13.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LASSERRE, Sebastien**
**35576 CESSON-SEVIGNE (FR)**
• **CHAMPEL, Mary-Luc**
**35576 CESSON-SEVIGNE (FR)**
• **CAI, Kangying**
**35576 CESSON-SEVIGNE (FR)**

(74) Representative: **Huchet, Anne et al**
**InterDigital CE Patent Holdings**
**20, rue Rouget de Lisle**
**92130 Issy-les-Moulineaux (FR)**

(54) **A METHOD AND APPARATUS FOR ENCODING/DECODING THE COLORS OF A COLORED POINT CLOUD WHOSE GEOMETRY IS REPRESENTED BY AN OCTREE-BASED STRUCTURE**

(57) The present principles relates to a method and device for encoding the colors of a colored point cloud whose geometry is represented by an octree-based structure, a leaf cube associated with a leaf node of said octree-based structure including at most one point of the colored point cloud. The method comprises:
- ordering (200) the points of the colored point cloud by scanning the leaf nodes of the octree-based structure according to a specific 3D path;
- assigning (210) the color of each ordered point of the colored point cloud to a pixel of an image according to a specific 2D path; and
- encoding (220) the image.

depth 0

depth 1

maximum depth

**Fig. 1**

**Description**

**1. Field.**

The present principles generally relate to coding and decoding of a colored point cloud representing the geometry and colors of a 3D object. Particularly, but not exclusively, the technical field of the present principles are related to encoding/decoding of the colors of a colored point cloud.

**2. Background.**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair, fur that may not be represented efficiently by other data format like meshes. Each point of a point cloud is often defined by a 3D spatial location (X, Y, and Zcoordinates in the 3D space) and possibly by other associated attributes such as color, represented in the RGB or YUV color space for example, a transparency, a reflectance, a two-component normal vector, etc.

In the following, a colored point cloud is considered, i.e. a set of 6-component points (X, Y, Z, R, G, B) or equivalently (X, Y, Z, Y, U, V) where (X,Y,Z) defines the spatial location of a point in a 3D space and (R,G,B) or (Y,U,V) defines a color of this point.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches (for example in "Image-Based Surface Compression", Tilo Ochotta & Dietmar Saupe, September 2008, in Computer Graphics Forum.) project a colored point cloud representing the geometry and colors of a 3D object, onto surfaces located around the 3D object to obtain videos on texture and depth, and to code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I)

Performance of compression is close to video compression for each projected point, but some contents may be more complex because of occlusions, redundancy and temporal stability when dynamic point clouds are considered. Consequently, point cloud compression is more demanding than video compression in term of bitrates.

Regarding occlusions, it is virtually impossible to get the full geometry of a complex topology without using many projections. The required resources (computing power, storage memory) for encoding/decoding all these projections are thus usually too high.

Regarding redundancy, if a point is seen twice on two different projections, then its coding efficiency is divided by two, and this can easily get much worse if a high number of projections is used. One may use non-overlapping patches before projection, but this makes the projected partition boundary unsmooth, thus hard to code, and this negatively impacts the coding performance.

Regarding temporal stability, non-overlapping patches before projection may be optimized for an object at a given time but, when this object moves, patch boundaries also move and temporal stability of the regions hard to code (= the boundaries) is lost. Practically, one gets compression performance not much better than all-intra coding because the temporal inter prediction is inefficient in this context.

Octree-based encoding is another well-known approach for encoding the geometry of a colored point cloud.

An octree-based structure is obtained for representing the geometry of the point cloud by splitting recursively a cube encompassing the colored point cloud until the leaf cubes, associated with the leaf nodes of said octree-based structure, contain no more than one point of the point cloud. The spatial locations of the leaf nodes of the octree-based structure thus represent the spatial locations of the points of the point cloud, i.e. its geometry.

Octree-based encoding is an efficient approach for encoding the geometry of the points of a colored point cloud but does not provide an encoding of the colors of the points of the colored point cloud.

Therefore, there is a need to find a solution for encoding the colors of a point cloud whose the geometry is represented by an octree-based structure.

## 3. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relate to the encoding of the colors of a colored point cloud whose geometry is represented by an octree-based structure. Said method is efficient in terms of coding because the colors of colored point cloud are mapped onto an image that may be encoded by legacy encoders.

The present principles relate to a method and a device for encoding the colors of a colored point cloud whose geometry is represented by an octree-based structure, a leaf cube associated with a leaf node of said octree-based structure including at most one point of the colored point cloud. The method comprises:

- ordering the points of the colored point cloud by scanning the leaf nodes of the octree-based structure according to a specific 3D path;
- assigning the color of each ordered point of the colored point cloud to a pixel of an image according to a specific 2D path; and
- encoding the image.

According to an embodiment, the specific 3D and/or the specific 2D path is encoded as an information data transmitted in a bitstream.

According to an embodiment, ordering the points of the colored point cloud comprises assigning a specific number to each node of the octree-based structure to identify uniquely each point included in a leaf cube associated with a leaf node.

According to an embodiment, the specific 3D path is a 3D Hilbert path.

According to an embodiment, assigning a specific number to each node of the octree-based structure uses an orientation system that defines a set of orientations, each orientation being defined by a direction and a rotation angle, and comprises assigning, recursively, an orientation and a local number to each of the eight child nodes according to the orientation previously assigned to the parent node and according to a specific child node numbering order.

According to an embodiment, a first Look-Up-Table is defined to assign the orientations of the eight children of a parent node according to the orientation previously assigned to the parent node and the specific child node numbering.

According to an embodiment, a second Look-Up-Table is defined to assign the local numbers of the eight children of a parent node according to the orientation of the parent node and the specific child node numbering order.

According to another of their aspects, the present principles relate to a method and device for decoding, from at least one bitstream, the colors of a colored point cloud whose geometry is represented by an octree-based structure, a leaf cube associated with a leaf node of said octree-based structure including at most one point representing a point of the colored point cloud. The method comprises:

- decoding an image from a bitstream;
- ordering the leaf nodes of the octree-based structure by scanning the leaf nodes of the octree-based structure according to a specific 3D path;
- obtaining the color of a point of the colored point cloud by scanning the decoded image according to a specific 2D path and the ordered leaf cubes associated with the leaf nodes of the octree-based structure.

According to an embodiment, the method also comprises a step of or the device also comprises means for obtaining the octree-based structure from node information data decoded from a bitstream for each node of the octree-based structure, and a leaf information data decoded from a bitstream for each leaf node of the octree-based structure, a node information data indicating whether or not a cube associated with the node is split or not, and a leaf information data indicating whether a leaf cube associated with said leaf node of the octree-based structure includes or not a point of the colored point cloud.

According to an embodiment, the specific 3D and/or the specific 2D path are decoded from an information data obtained from a bitstream.

According to an embodiment, ordering the leaf nodes of the octree-based structure comprises assigning a specific number to each node of the octree-based structure to identify uniquely each point included in a leaf cube associated with a leaf node.

According to an embodiment, the specific 3D path is a 3D Hilbert path.

According to an embodiment, assigning a specific number to each node of the octree-based structure uses an orientation system that defines a set of orientations, each orientation being defined by a direction and a rotation angle, and comprises assigning, recursively, an orientation and a local number to each of the eight children nodes according to the orientation previously assigned to the parent node and according to a specific child node numbering order.

The specific nature of the present principles as well as other objects, advantages, features and uses of the present principles will become evident from the following description of examples taken in conjunction with the accompanying drawings.

**4. Brief Description of Drawings.**

In the drawings, examples of the present principles are illustrated. It shows:

- **Fig. 1** illustrates an example of an octree-based structure;
- **Fig. 2** shows schematically a diagram of the steps of the method for encoding a colored point cloud representing the geometry and colors of a 3D object in accordance with an example of the present principles;
- **Fig. 3** illustrates the method of **Fig. 2;**
- **Fig. 4** shows an example of a 3D Hilbert path;
- **Fig. 5** shows an illustration of an orientation system;
- **Fig. 6** shows an example of orientations when a 3D Hilbert path is characterized by the orientation system of **Fig. 5;**
- **Fig. 7** shows a diagram of the sub-steps of the step 200 in accordance with an embodiment of the present principles;
- **Fig. 8** shows an example of a specific node numbering order;

- **Fig. 9** shows an example of orientations and local numbers assigned to sub-cubes following a specific node numbering order;
- **Fig. 10** show an example of a Look-Up-Table of orientations;
- **Fig. 11** show an example of a Look-Up-Table of local numbers;
- **Fig. 12** shows an illustration of a continuous 2D Z-scan curve;
- **Fig. 13** shows an illustration of a continuous 2D Peano curve;
- **Fig. 14** shows an illustration of a block-based 2D raster scanning path;
- **Fig. 15** shows an illustration of a block-based 2D Hilbert scanning path;
- **Fig. 16** shows schematically a diagram of the steps of the method for decoding, from at least one bitstream, the colors of a colored point cloud whose geometry is represented by an octree-based structure in accordance with an example of the present principles;
- **Fig. 17** illustrates the method of **Fig. 16;**
- **Fig. 18** shows an example of an architecture of a device in accordance with an example of present principles;
- **Fig. 19** shows two remote devices communicating over a communication network in accordance with an example of present principles; and
- **Fig. 20** shows the syntax of a signal in accordance with an example of present principles.

Similar or same elements are referenced with the same reference numbers.

**6. Description of Example of the present principles.**

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a colored point cloud but extends to the encoding/decoding of a sequence of colored point clouds because each colored point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values.

Octree-based encoding is a well-known approach for encoding the geometry of a colored point cloud IPC, i.e. the spatial locations of the points of the colored point cloud IPC.

An octree-based structure O is a structure in which each parent node may comprise at most eight children nodes and in which a cube is associated with each of this node. A root node (depth 0) is the unique node without any parent node and each child node (depth greater than 0) has a single parent node. A leaf node is a node with no child node. A leaf cube is a cube associated with a leaf node of the octree-based structure O.

The octree-based structure O may be obtained for representing the geometry of the colored point cloud IPC by splitting recursively a cube encompassing the colored point cloud IPC until the leaf cubes, associated with the leaf nodes of said octree-based structure O, contain no more than one point of the colored point cloud IPC. A point located in a leaf cube represents a point of the colored point cloud IPC includes in said leaf cube. Thus, the leaf cubes of the octree-based structure O that include points (one point per leaf cube) represent the spatial locations of those points of the colored point cloud IPC.

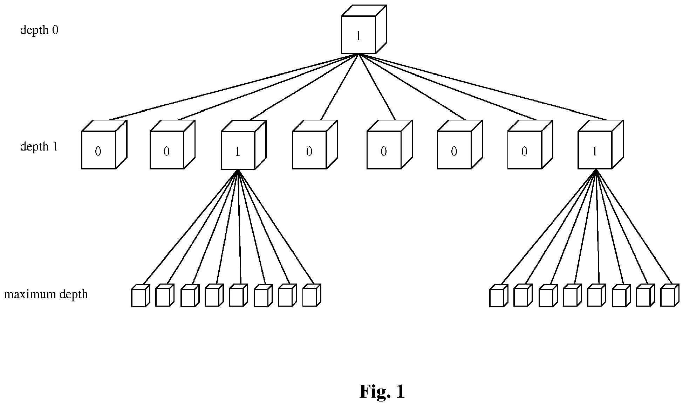

In the example illustrated on **Fig. 1,** the cube associated with the root node (depth 0) is split into 8 sub-cubes (depth 1) and two sub-cubes of depth 1 are then split into 8 sub-cubes (maximum depth = 2).

The sizes of the cubes of a same depth are usually the same but the present principles are not limited to this example. A specific process may also determine different numbers of sub-cubes per depth, when a cube is split, and/or multiple sizes of cubes of a same depth or according to their depths.

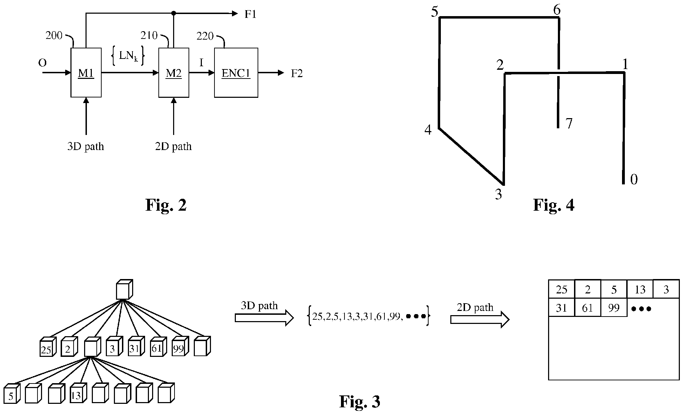

**Fig. 2** shows schematically a diagram of the steps of the method for encoding the colors of a colored point cloud whose geometry is represented by the octree-based structure O in accordance with an example of the present principles.

In step 200, a module M1 orders the points of the colored point cloud IPC by scanning the leaf nodes of the octree-based structure O according to a specific 3D path.

For example, as illustrated in **Fig. 3,** a number is assigned to each leaf node of the octree-based structure O and the leaf cubes that include points of the colored point cloud are ordered according to their assigned numbers. In **Fig. 3,** only the number of the leaf node associated with a leaf cube that includes a point of the colored point cloud IPC are shown (25, 2, ...).

The ordered leaf cubes, i.e. the ordered points of the colored point cloud IPC, may form a list of ordered numbers as shown in **Fig. 3.** Each number refers to a specific leaf cube that include a point of the colored point cloud IPC.

According to an embodiment of step 200, a node information data is encoded in a bitstream F1 for each node of the octree-based structure O, indicating whether a cube associated with a node is split or not.

According to an embodiment of step 200, the node information data is a binary flag equal to 1 to indicate that a cube associated with a node is split and 0 otherwise.

According to an optional variant, a maximum depth of the cube splitting is also encoded in the bitstream F1.

This avoids signaling the node information data for all cubes having the maximum depth.

According to an embodiment of step 200, a leaf information data is encoded in the bitstream F1 for each leaf node of the octree-based structure O, indicating whether a leaf cube associated with a leaf node includes or not a point of the colored point cloud.

According to an embodiment of step 200, the leaf information data is a binary flag equal to 1 to indicate that a leaf cube is split and 0 otherwise.

In step 210, a module M2 assigns the color of each ordered point of the colored point cloud IPC to a pixel of an image I according to a specific 2D path.

As illustrated in **Fig. 3,** the 2D path may be the raster order usually used in image processing. Following such a 2D path, the color of the first point (25) of the list of ordered points is assigned to the top-left pixel of the image I, the color of the second point (2) of the list of ordered points is assigned to the adjacent pixel on the same row, etc.

In step 220, an encoder ENC1 encodes the image I.

According to an embodiment, the specific 3D and/or the specific 2D path are encoded as an information data, such a set of bits. Said information data may represents an index of a table listing several candidate 3D and/or 2D paths.

According to an embodiment, said information data is stored and/or transmitted in a bitstream F1.

The encoded image I may be stored and/or transmitted in a bitstream F2.

These bitstreams F1 and F2 may be carried by either a single or multiple signals.

According to an embodiment of step 220, the encoder ENC1 is compliant with a legacy encoder such as

- JPEG, specification ISO/CEI 10918-1 UIT-T Recommendation T.81, https://www.itu.int/rec/T-REC-T.81/en ,
- AVC, also named MPEG-4 AVC or h264. Specified in both UIT-T H.264 and ISO/CEI MPEG-4 Part 10 (ISO/CEI 14496-10), http://www.itu.int/rec/T-REC-H.264/en,
- or HEVC (its specification is found at the ITU website, T recommendation, H series, h265, http://www.itu.int/rec/T-REC-H.265-201612-I/en)

for example.

The numbers of rows and columns of the image I are defined beforehand.

Advantageously, it may be a multiple of the size of a coding unit (or block) of the image or video encoder ENC1. For instance, when using HEVC, it is preferably a multiple of 64 for both numbers of rows and columns. The number of pixels of the image I should be at least the number of points of the point cloud IPC to ensure that the colors of all points can be mapped onto the image I. For example, a one-million-point colored point cloud IPC may be mapped onto a 1024x1024 pixel image I.

According to an embodiment of the step 200, the module M1 assigns a specific number $LN_k$ to each node of the octree-based structure O to identify uniquely each point included in a leaf cube associated with a leaf node.

For example, the specific number $LN_k$ assigned to a child node is given by:

$$LN_k = 8 * PN_k + n_k \qquad (1)$$

where $PN_k$ is the specific number assigned to the parent node of a child node and $n_k$ is a local number assigned to the child node.

According to an embodiment of the step 200, the specific 3D path is a 3D Hilbert path defined as a discrete approximation of a 3D Hilbert curve as illustrated on **Fig. 4.**

On **Fig. 4,** the eight children of a parent node of the octree-based structure O are represented as eight vertices numbered 0 to 7 that are connected symbolically by segments. In other words, the cube associated with a parent node is split and the eight sub-cubes are associated with vertices. Thus, following the 3D Hilbert path for a given depth level of the octree-based structure O is defined by considering the vertex 0 in first, next the vertex 1,..., and finally the vertex 7.

Consequently, the 3D Hilbert path allows to scan the children of a parent node of the octree-based structure O according to a specific ordering.

The 3D Hilbert path and the specific ordering illustrated in **Fig. 4** shall be reproduced at any depth level of the octree-based structure O.

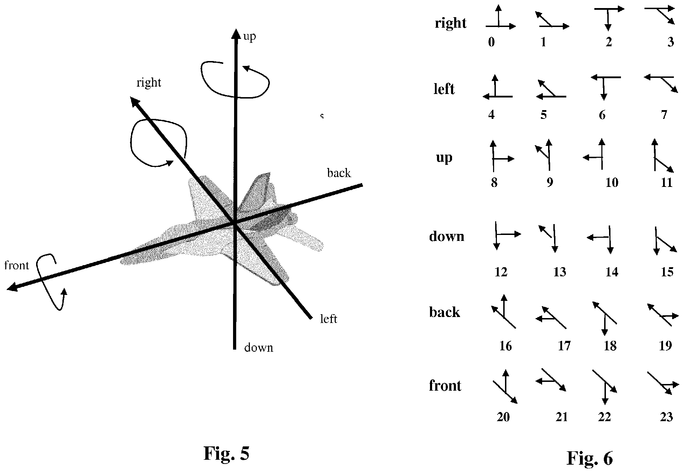

According to an embodiment of the step 200, assigning a specific number $LN_k$ to each node of the octree-based structure O uses an orientation system whose characterization uses the notion of an "aircraft" moving along segments that connect the eight vertices as illustrated in **Fig. 5.**

The "aircraft" may move along three axes (front/back, up/down, right/left) and may rotate about each axe with an angle of 0, 90, 180 or 270 degrees.

Therefore, a set $\Omega$ of 24 orientations of the "aircraft" is defined as illustrated in **Fig. 6,** each orientation being defined by a direction (front/back, up/down, right/left) and a rotation angle (0, 90, 180 or 270 degrees) and labelled by a number 0-23.

For example, the orientation $\Omega$=16 corresponds to the direction "back" combined with a rotation angle of 0 degree and the orientation $\Omega$=10 corresponds to the direction "up" combined with a rotation angle of 270 degrees.

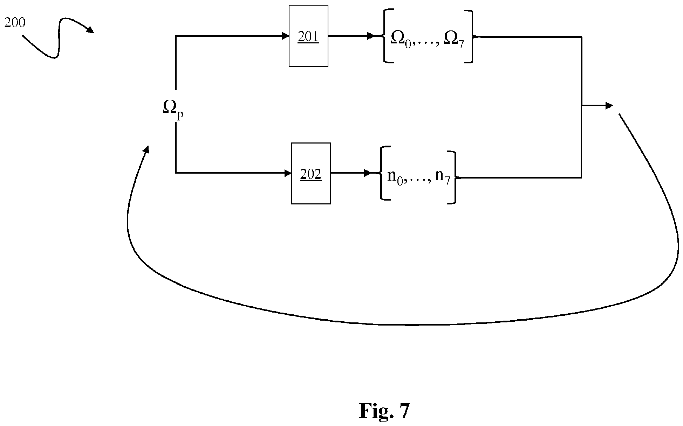

According to an embodiment of the step 200, illustrated on **Fig. 7,** the module M1 assigns an orientation $\{\Omega_0, ..., \Omega_7\}$ (step 201) and a local number $\{n_0, ..., n_7\}$ (step 202) to each of the eight child nodes according to the orientation $\Omega_p$ previously assigned to the parent node and according to a specific child node numbering order. This specific child node numbering order is defined once for all on all the nodes and is independent on the orientation $\Omega_p$.

The steps 201 and 202 are recursive to assign an orientation ($\Omega_m$) and a local number ($n_m$) to each node of the octree-based structure O according to a 3D Hilbert path.

A specific number $LN_k$ is then assigned to each node of the octree-based structure O (eq. 1) and the leaf cubes (associated with leaf nodes of the octree-based structure O) that include points of the colored point cloud IPC are then ordered according to these specific numbers $LN_k$.

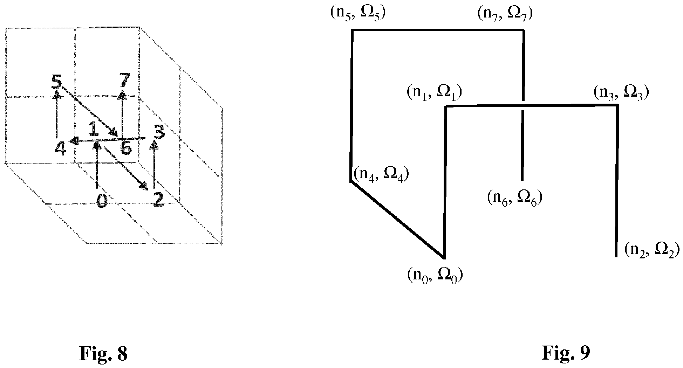

For example, the pairs ($\Omega_m$, $n_m$) are assigned to each vertex of a leaf cube as illustrated in **Fig. 9** when the specific node numbering order, illustrated on **Fig. 8,** is used.

The present principles are not limited to any specific node numbering order but extends to any node numbering order.

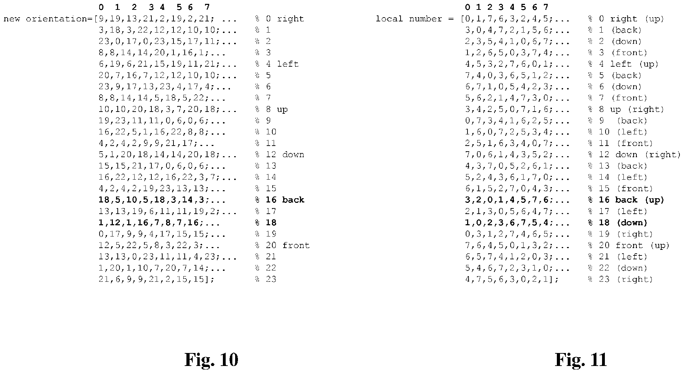

According to an embodiment of the step 201, illustrated in **Fig. 10,** a first Look-Up-Table is defined to assign the orientations of the eight children of a parent node according to the orientation of the parent node and the specific child node numbering. The orientation of the parent node defines a row of the Look-Up-Table and the columns of the Look-Up-Table defines different values of the orientations of the children nodes.

For example, when the orientation of the parent node equals 16, the orientations of the children are (18, 5, 10, 5, 18, 3, 14, 3) as illustrated in **Fig. 10.**

According to an embodiment of the step 202, illustrated in **Fig. 11,** a second Look-Up-Table is defined to assign the local numbers of the eight children of a parent node according to the orientation of the parent node and the specific child node numbering order. The orientation of the parent node defines a row of the Look-Up-Table and the columns of the Look-Up-Table defines different values of the local numbers of the children nodes.

These two later embodiments provided a very fast implementation of the method because only multiple accesses to Look-Up-Tables are required to assign orientations and local numbers to the node of the octree-based structure O.

For example, when the specific numbering order is given by **Fig. 8** and the orientation of the parent node equals 16, the local numbers of the children are (3,2,0,1,4,5,7,6) as illustrated in **Fig. 11.**

Then, according to eq. 1, if the specific number $PN_k$ assigned to the parent node equals 1, for example, the number $LN_0$ assigned to the child 0 of this parent node equals 11 (8*1+3), the number $LN_1$ assigned to the child 1 of this parent node equals 10 (8*1+2), the number $LN_2$ assigned to the child 1 of this parent node equals 8 (8*1+0), the number $LN_3$ assigned to the child 1 of this parent node equals 9 (8*1+1), etc.

Then, if the child node 0 is not a leaf node, then this node associated with the pair (specific number, orientation) = (11,18) is considered as being a parent node and the orientations and local numbers are assigned to its children according to the orientation 18. The orientations of its eight child nodes are (1,12,1,16,7,8,7,16), and the local numbers (1,0,2,3,6,7,5,4) lead to, following eq. 1, the specific number (89,88,90,91,94,95,93,92) for these eight child nodes. These child nodes may, if not leaf nodes, become parent nodes and the recursive process continues.

Next, if the child node 1 is not a leaf node, then this node associated with the pair (10,5) is considered as being a parent node and the orientations and local numbers are assigned to its children according to the orientation 5, etc.

If a child node is a leaf node the number assigned to it is the specific number $LN_k$.

The present principles are limited to the 3D Hilbert path and other specific 3D path may be used following or not a node numbering order similar to the node numbering detailed above for the 3D Hilbert path.

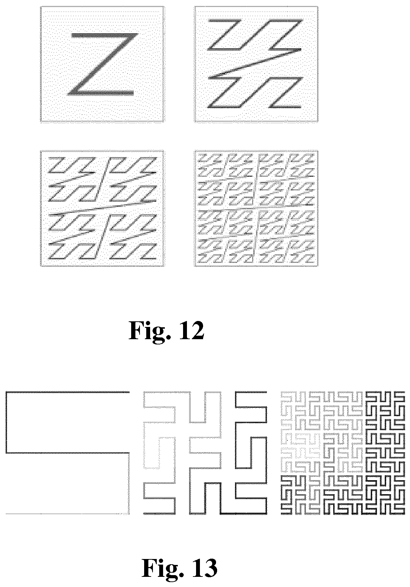

**Figs. 12** and **13** show other examples of specific 2D paths such as the Z-scan curve **(Fig. 12)** or the Peano curve **(Fig. 13).** The reader will understand that these specific 2D paths may also extend to the 3D case.

Following the step 200, the points of the colored point cloud IPC that included in leaf cubes of leaf nodes of the octree-based structure O are ordered according to the specific numbers $LN_k$.

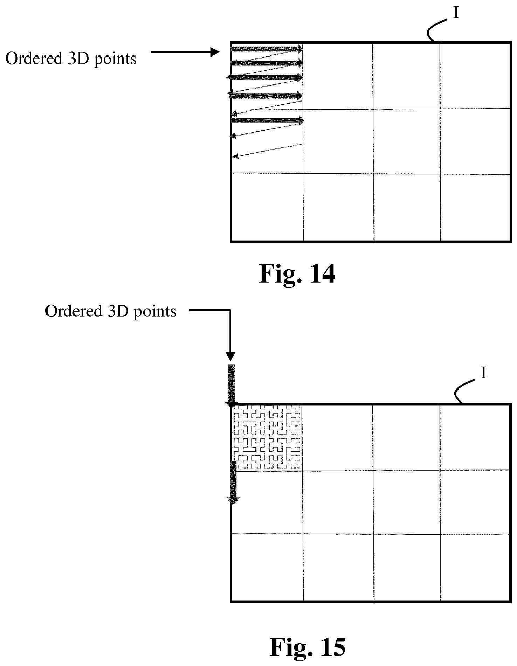

According to an embodiment of step 210, illustrated in **Fig. 14,** the color of each ordered point of the colored point cloud IPC is assigned to a pixel of an image according to a raster scan.

According to an embodiment of step 210, the color of each ordered point of the colored point cloud IPC is assigned to a pixel of an image according to a discrete approximation of a continuous 2D Hilbert curve as illustrated in **Fig. 15.**

Both the continuous Hilbert curve and its discrete approximations are useful because they give a 3D to 1 D (step 200) or 1 D to 2D (step 210) space mapping that fairly well preserves locality. Basically this means that if (x,y) are the coordinates of a 2D point within a unit square, and d is the distance along the 2D curve when it reaches that 2D point, then 2D points that have nearby d values will also have nearby (x,y) values. The converse cannot always be true. There will sometimes be points where the (x,y) coordinates are close but their d values are far apart. This is also valid in a 3D space with points of coordinates (x,y,z) in an unit cube. Preserving locality is advantageous because it allows to preserve color (texture) spatial correlation when performing the scanning of points from the 3D geometry to the image I. Compression capability of 2D image/video codecs largely come from texture spatial correlation. Consequently, not preserving this correlation would lead to very poor compression of the image I.

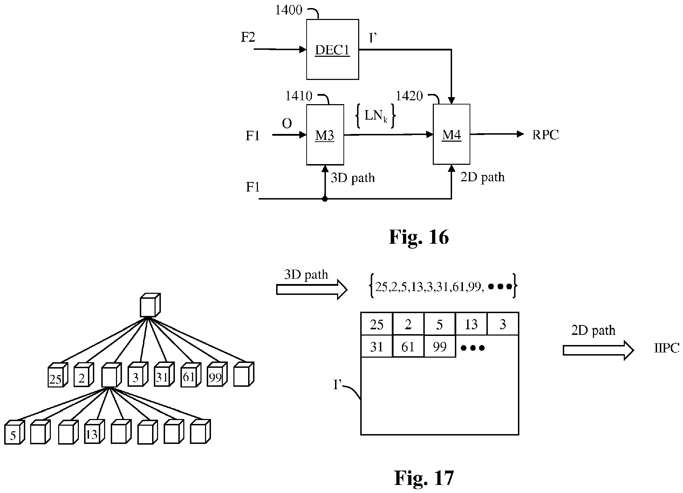

**Fig. 16** shows schematically a diagram of the steps of the method for decoding, from at least one bitstream, the colors of a reconstructed point cloud RPC whose geometry is represented by an octree-based structure O in accordance with an example of the present principles.

As explained above, the octree-based structure O may be obtained for representing the geometry of the colored point cloud IPC by splitting recursively a cube encompassing the colored point cloud IPC until the leaf cubes, associated with the leaf nodes of said octree-based structure O, contain no more than one point of the colored point cloud IPC. A point located in a leaf cube represents a point of the colored point cloud IPC included in said leaf cube. Thus, the leaf cubes of the octree-based structure O that include points (one point per leaf cube) represent the spatial locations of those points of the colored point cloud IPC.

According to an embodiment, the octree-based structure O is obtained from node information data decoded from the bitstream F1 for each node of the octree-based structure O, and a leaf information data decoded from the bitstream F1 for each leaf node of the octree-based structure O.

A node information data indicates whether or not a cube associated with the node is split or not, and a leaf information data indicates whether a leaf cube associated with said leaf node of the octree-based structure O, includes or not a point of the colored point cloud.

According to an optional variant, a maximum depth of the cube splitting is also decoded from the bitstream F1.

In step 1400, a decoder DEC1 decodes an encoded image I from a bitstream F2, to obtain a decoded image I'.

According to an embodiment of step 1400, the decoder DEC1 is compliant with a legacy decoder such as JPEG, AVC or HEVC for example.

In step 1410, the module M3 orders the leaf nodes of the octree-based structure O by scanning the leaf nodes of the octree-based structure O according to a specific 3D path.

The ordering of step 1410 is similar to the ordering of step 200 and may be based on a specific number $LN_k$ assigned to each leaf node of the octree-based structure O **(Fig. 2).**

A list of ordered leaf cubes that includes points of the colored point cloud IPC is then obtained.

In step 1420, a module M4 obtains the color of a point of the reconstructed point cloud RPC by scanning the decoded image I' according to a specific 2D path and the ordered leaf cubes associated with the leaf nodes of the octree-based structure O.

For example, as illustrated in **Fig. 17,** when the specific 2D path is a raster order, the color of the top-left pixel of the decoded image I' is the color of the first leaf cube (point) (25) of the list of ordered leaf cubes, the color of the adjacent pixel is the color of the second point (2) of the list of ordered leaf cubes, etc.

According to an embodiment, the specific 3D and/or the specific 2D path are decoded from an information data, such a set of bits. Said information data may represents an index of a table listing several candidate 3D and/or 2D paths.

According to an embodiment, said information data is obtained from a storing memory and/or from the bitstream F1.

According to an embodiment of step 1420, illustrated in **Fig. 14,** the color of each ordered point of the reconstructed point cloud PRC is obtained from a pixel of the decoded image I' according to a raster scan.

According to an embodiment of step 210, the color of each ordered point of the reconstructed point cloud RPC is obtained from a pixel of the decoded image I'according to a discrete approximation of a continuous 2D Hilbert curve as illustrated in **Fig. 15.**

On **Fig. 1-17,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

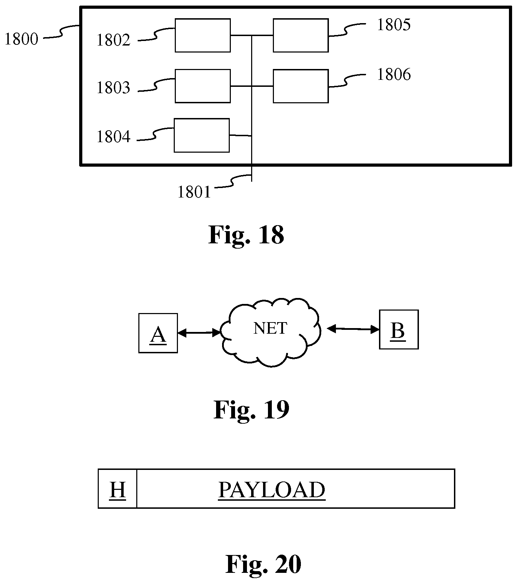

**Fig. 18** represents an exemplary architecture of a device 1800 which may be configured to implement a method described in relation with **Fig. 1-17.**

Device 1800 comprises following elements that are linked together by a data and address bus 1801:

- a microprocessor 1802 (or CPU), which is, for example, a DSP (or Digital Signal Processor);
- a ROM (or Read Only Memory) 1803;
- a RAM (or Random Access Memory) 1804;
- an I/O interface 1805 for reception of data to transmit, from an application; and
- a battery 1806.

In accordance with an example, the battery 1806 is external to the device. In each of mentioned memory, the word « register » used in the specification can correspond to area of small capacity (some bits) or to very large area (e.g. a whole program or large amount of received or decoded data). The ROM 1803 comprises at least a program and parameters. The ROM 1803 may store algorithms and instructions to perform techniques in accordance with present principles. When switched on, the CPU 1802 uploads the program in the RAM and executes the corresponding instructions.

RAM 1804 comprises, in a register, the program executed by the CPU 1802 and uploaded after switch on of the device 1800, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the orginal colored point cloud IPC is obtained from a source. For example, the source belongs to a set comprising:

- a local memory (1803 or 1804), e.g. a video memory or a RAM (or Random Access Memory), a flash memory, a ROM (or Read Only Memory), a hard disk;
- a storage interface (1805), e.g. an interface with a mass storage, a RAM, a flash memory, a ROM, an optical disc or a magnetic support;
- a communication interface (1805), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example of the decoding or a decoder, the reconstructed colored point cloud CPC is sent to a destination; specifically, the destination belongs to a set comprising:

- a local memory (1803 or 1804), e.g. a video memory or a RAM, a flash memory, a hard disk;
- a storage interface (1805), e.g. an interface with a mass storage, a RAM, a flash memory, a ROM, an optical disc or a magnetic support;
- a communication interface (1805), e.g. a wireline interface (for example a bus interface (e.g. USB (or Universal Serial Bus)), a wide area network interface, a local area network interface, a HDMI (High

Definition Multimedia Interface) interface) or a wireless interface (such as a IEEE 802.11 interface, WiFi ® or a Bluetooth ® interface);

- a rendering device; and
- a display.

In accordance with examples of encoding or encoder, the bitstream F1-F2 are sent to a destination. As an example, at least one of bitstreams F1-F2 is stored in a local or remote memory, e.g. a video memory (1804) or a RAM (1804), a hard disk (1803). In a variant, at least one of bitstreams F1-F2 is sent to a storage interface (1805), e.g. an interface with a mass storage, a flash memory, ROM, an optical disc or a magnetic support and/or transmitted over a communication interface (1805), e.g. an interface to a point to point link, a communication bus, a point to multipoint link or a broadcast network.

In accordance with examples of decoding or decoder, at least one of bitstreams F1-F2 is obtained from a source. Exemplarily, a bitstream is read from a local memory, e.g. a video memory (1804), a RAM (1804), a ROM (1803), a flash memory (1803) or a hard disk (1803). In a variant, the bitstream is received from a storage interface (1805), e.g. an interface with a mass storage, a RAM, a ROM, a flash memory, an optical disc or a magnetic support and/or received from a communication interface (1805), e.g. an interface to a point to point link, a bus, a point to multipoint link or a broadcast network.

In accordance with examples, device 1800 being configured to implement an encoding method described in relation with **Fig. 1-15,** belongs to a set comprising:

- a mobile device ;
- a smartphone or a TV set with 3D capture capability
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

In accordance with examples, device 1800 being configured to implement a decoding method described in relation with **Figs. 16-17,** belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer) ;
- a laptop ;
- a display
- a stereoscopic display and
- a decoding chip.

According to an example of the present principles, illustrated in **Fig. 19,** in a transmission context between two remote devices A and B over a communication network NET, the device A comprises a processor in relation with memory RAM and ROM which are configured to implement a method for encoding a colored point cloud as described in relation with the **Figs. 1-15** and the device B comprises a processor in relation with memory RAM and ROM which are configured to implement a method for decoding as described in relation with **Figs. 16-17.**

In accordance with an example, the network is a broadcast network, adapted to broadcast encoded colored point clouds from device A to decoding devices including the device B.

A signal, intended to be transmitted by the device A, carries at least one of bitstreams F1-F2.

This signal may thus carry on a node information data for each node of the octree-based structure O, indicating whether a cube associated with a node is split or not.

This signal may also carries on a maximum depth of the cube splitting.

This signal may also carries on a leaf information data for each leaf node of the octree-based structure O, indicating whether a leaf cube associated with a leaf node includes or not a point of the colored point cloud.

This signal may also carries on information data representative of a specific 3D path and/or a specific 2D path

**Fig. 20** shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- a binary flag that indicates if a cube associated with a node of an octree-base structure is split or not;
- a binary flag that indicates if a leaf cube associated with a leaf node of an octree-based structure is split or not;
- bits representative of a 3D and/or 2D path.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding the colors of a colored point cloud whose geometry is represented by an octree-based structure, a leaf cube associated with a leaf node of said octree-based structure including at most one point of the colored point cloud, **characterized in that** the method comprises:

    - ordering (200) the points of the colored point cloud by scanning the leaf nodes of the octree-based structure according to a specific 3D path;
    - assigning (210) the color of each ordered point of the colored point cloud to a pixel of an image according to a specific 2D path; and
    - encoding (220) the image.

2. A device for encoding the colors of a colored point cloud whose geometry is represented by an octree-based structure, a leaf cube associated with a leaf node of said octree-based structure including at most one point of the colored point cloud, **characterized in that** the device comprises means for:

    - ordering the points of the colored point cloud by scanning the leaf nodes of the octree-based structure according to a specific 3D path;
    - assigning the color of each ordered point of the colored point cloud to a pixel of an image according to a specific 2D path; and
    - encoding the image.

3. The method of claim 1 or the device of claim 2, wherein the specific 3D and/or the specific 2D path is encoded as an information data transmitted in a bitstream.

4. The method of claim 1 or 3 or the device of claim 2-3, wherein ordering (200) the points of the colored point cloud comprises assigning a specific number ($LN_k$) to each node of the octree-based structure to identify uniquely each point included in a leaf cube associated with a leaf node.

5. The method of one of the claims 1, 3-4 or the device of one of the claims 2-4, wherein the specific 3D path is a 3D Hilbert path.

6. The method or the device of claim 4-5, wherein assigning a specific number ($LN_k$) to each node of the octree-based structure uses an orientation system that defines a set of orientations, each orientation being defined by a direction and a rotation angle, and comprises assigning, recursively, an orientation ($\{\Omega_0, ..., \Omega_7\}$) (201) and a local number ($\{n_0, ..., n_7\}$) (202) to each of the eight child nodes according to the orientation ($\Omega_p$) previously assigned to the parent node and according to a specific child node numbering order.

**7.** The method of claim 6, wherein a first Look-Up-Table is defined to assigns (201) the orientations of the eight children of a parent node according to the orientation ($\Omega_p$) previously assigned to the parent node and the specific child node numbering.

**8.** The method or the device of claim 6-7, wherein a second Look-Up-Table is defined to assign (202) the local numbers of the eight children of a parent node according to the orientation of the parent node and the specific child node numbering order.

**9.** A method for decoding, from at least one bitstream, the colors of a colored point cloud whose geometry is represented by an octree-based structure, a leaf cube associated with a leaf node of said octree-based structure including at most one point representing a point of the colored point cloud, **characterized in that** the method comprises:

- decoding (1400) an image from a bitstream;
- ordering (1410) the leaf nodes of the octree-based structure by scanning the leaf nodes of the octree-based structure according to a specific 3D path;
- obtaining (1420) the color of a point of the colored point cloud (IIPC) by scanning the decoded image (I') according to a specific 2D path and the ordered leaf cubes associated with the leaf nodes of the octree-based structure.

**10.** A device for decoding, from at least one bitstream, the colors of a colored point cloud whose geometry is represented by an octree-based structure, a leaf cube associated with a leaf node of said octree-based structure including at most one point representing a point of the colored point cloud, **characterized in that** the device comprises means for:

- decoding an image from a bitstream;
- ordering the leaf nodes of the octree-based structure by scanning the leaf nodes of the octree-based structure according to a specific 3D path;
- obtaining the color of a point of the colored point cloud by scanning the decoded image (I') according to a specific 2D path and the ordered leaf cubes associated with the leaf nodes of the octree-based structure.

**11.** The method of claim 9 or the device of claim 11, wherein the method also comprises a step of or the device also comprises means for obtaining the octree-based structure from node information data decoded from a bitstream for each node of the octree-based structure, and a leaf information data decoded from a bitstream for each leaf node of the octree-based structure, a node information data indicating whether or not a cube associated with the node is split or not, and a leaf information data indicating whether a leaf cube associated with said leaf node of the octree-based structure includes or not a point of the colored point cloud.

**12.** The method of claim 9-11 or the device of claim 10-11, wherein the specific 3D and/or the specific 2D path are decoded from an information data obtained from a bitstream.

**13.** The method of claim 9 or 11-12 or the device of claim 10-12, wherein ordering (1410) the leaf nodes of the octree-based structure comprises assigning a specific number ($LN_k$) to each node of the octree-based structure to identify uniquely each point included in a leaf cube associated with a leaf node.

**14.** The method of one of the claims 9, 11-13 or the device of one of the claims 10-13, wherein the specific 3D path is a 3D Hilbert path.

**15.** The method or the device of claim 13-14, wherein assigning a specific number ($LN_k$) to each node of the octree-based structure uses an orientation system that defines a set of orientations, each orientation being defined by a direction and a rotation angle, and comprises assigning, recursively, an orientation ($\{\Omega_0, ..., \Omega_7\}$) (201) and a local number ($\{n_0, ..., n_7\}$) (202) to each of the eight children nodes according to the orientation ($\Omega_p$) previously assigned to the parent node and according to a specific child node numbering order.

**Fig. 1**

**Fig. 2**

**Fig. 4**

**Fig. 3**

Fig. 5

right 0 1 2 3

left 4 5 6 7

up 8 9 10 11

down 12 13 14 15

back 16 17 18 19

front 20 21 22 23

Fig. 6

**Fig. 7**

Fig. 8

Fig. 9

```
                    0  1  2  3 4  5 6  7
new orientation=[9,19,13,21,2,19,2,21; ...    % 0 right
                3,18,3,22,12,12,10,10;...      % 1
                23,0,17,0,23,15,17,11;...      % 2
                8,8,14,14,20,1,16,1;...        % 3
                6,19,6,21,15,19,11,21;...      % 4 left
                20,7,16,7,12,12,10,10;...      % 5
                23,9,17,13,23,4,17,4;...       % 6
                8,8,14,14,5,18,5,22;...        % 7
                10,10,20,18,3,7,20,18;...      % 8 up
                19,23,11,11,0,6,0,6;...        % 9
                16,22,5,1,16,22,8,8;...        % 10
                4,2,4,2,9,9,21,17;...          % 11
                5,1,20,18,14,14,20,18;...      % 12 down
                15,15,21,17,0,6,0,6;...        % 13
                16,22,12,12,16,22,3,7;...      % 14
                4,2,4,2,19,23,13,13;...        % 15
                18,5,10,5,18,3,14,3;...        % 16 back
                13,13,19,6,11,11,19,2;...      % 17
                1,12,1,16,7,8,7,16;...         % 18
                0,17,9,9,4,17,15,15;...        % 19
                12,5,22,5,8,3,22,3;...         % 20 front
                13,13,0,23,11,11,4,23;...      % 21
                1,20,1,10,7,20,7,14;...        % 22
                21,6,9,9,21,2,15,15];          % 23
```

**Fig. 10**

```
                   0 1 2 3 4 5 6 7
local number = [0,1,7,6,3,2,4,5;...    % 0 right (up)
               3,0,4,7,2,1,5,6;...     % 1 (back)
               2,3,5,4,1,0,6,7;...     % 2 (down)
               1,2,6,5,0,3,7,4;...     % 3 (front)
               4,5,3,2,7,6,0,1;...     % 4 left (up)
               7,4,0,3,6,5,1,2;...     % 5 (back)
               6,7,1,0,5,4,2,3;...     % 6 (down)
               5,6,2,1,4,7,3,0;...     % 7 (front)
               3,4,2,5,0,7,1,6;...     % 8 up (right)
               0,7,3,4,1,6,2,5;...     % 9  (back)
               1,6,0,7,2,5,3,4;...     % 10 (left)
               2,5,1,6,3,4,0,7;...     % 11 (front)
               7,0,6,1,4,3,5,2;...     % 12 down (right)
               4,3,7,0,5,2,6,1;...     % 13 (back)
               5,2,4,3,6,1,7,0;...     % 14 (left)
               6,1,5,2,7,0,4,3;...     % 15 (front)
               3,2,0,1,4,5,7,6;...     % 16 back (up)
               2,1,3,0,5,6,4,7;...     % 17 (left)
               1,0,2,3,6,7,5,4;...     % 18 (down)
               0,3,1,2,7,4,6,5;...     % 19 (right)
               7,6,4,5,0,1,3,2;...     % 20 front (up)
               6,5,7,4,1,2,0,3;...     % 21 (left)
               5,4,6,7,2,3,1,0;...     % 22 (down)
               4,7,5,6,3,0,2,1];       % 23 (right)
```

**Fig. 11**

18

**Fig. 12**

**Fig. 13**

I

Ordered 3D points

**Fig. 14**

Ordered 3D points

I

**Fig. 15**

1400

F2 → DEC1 → I'

1410 {LN_k} 1420

F1 → O → M3 → M4 → RPC

F1 → 3D path → 2D path

**Fig. 16**

3D path ⟹ {25,2,5,13,3,31,61,99, •••}

| 25 | 2 | 5 | 13 | 3 |
|----|---|---|----|---|
| 31 | 61 | 99 | ••• | |

I'

2D path ⟹ IIPC

**Fig. 17**

1800    1802    1805

1803    1806

1804

1801

**Fig. 18**

A ⟷ NET ⟷ B

**Fig. 19**

| H | PAYLOAD |
|---|---------|

**Fig. 20**

Europäisches
Patentamt

European
Patent Office

Office européen
des brevets

# EUROPEAN SEARCH REPORT

Application Number

EP 17 30 5928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUFAEL MEKURIA: "Point Cloud Encoder and Decoder with improved colour coding", 111. MPEG MEETING; 6-2-2015 - 20-2-2015; GENEVA; (MOTION PICTURE EXPERT GROUP OR ISO/IEC JTC1/SC29/WG11),, no. m35490, 1 February 2015 (2015-02-01), XP030063858, | 1-4,9-13 | INV. H04N19/96 H04N19/597 G06T17/00 G06T17/10 G06T9/40 H04N19/20 |
| Y | * paragraph [0002]; figures 1-3; table 1 * | 5-8,14, 15 | |
| X | RUFAEL MEKURIA: "Proposal for MPEG-4 PCC features roadmap", 115. MPEG MEETING; 30-5-2016 - 3-6-2016; GENEVA; (MOTION PICTURE EXPERT GROUP OR ISO/IEC JTC1/SC29/WG11),, no. m38754, 27 May 2016 (2016-05-27), XP030067106, | 1,2,9,10 | |
| A | * paragraph [0001]; figure 1 * | 3-8, 11-15 | |
| A | CAI KANGYING ET AL: "Probability Model-Adaptive Coding of Point Clouds with Octree Decomposition", 116. MPEG MEETING; 17-10-2016 - 21-10-2016; CHENGDU; (MOTION PICTURE EXPERT GROUP OR ISO/IEC JTC1/SC29/WG11),, no. m39213, 15 October 2016 (2016-10-15), XP030067559, * abstract * * paragraph [0001] * | 1-15 | TECHNICAL FIELDS SEARCHED (IPC) G06T H04N |

-/--

The present search report has been drawn up for all claims

| Place of search | Date of completion of the search | Examiner |
|---|---|---|
| Munich | 17 October 2017 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 5928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | UHER VOJTECH ET AL: "A proposal of hierarchical vertex clustering based on the Gosper curve", 2016 IEEE INTERNATIONAL CONFERENCE ON SYSTEMS, MAN, AND CYBERNETICS (SMC), IEEE, 9 October 2016 (2016-10-09), pages 632-637, XP033060215, DOI: 10.1109/SMC.2016.7844311 [retrieved on 2017-02-06] * abstract * * paragraphs [000I] - [0III]; figures 1-6 * | 5-8,14, 15 | |

-----

TECHNICAL FIELDS
SEARCHED       (IPC)

The present search report has been drawn up for all claims

| Place of search | Date of completion of the search | Examiner |
|---|---|---|
| Munich | 17 October 2017 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TILO OCHOTTA ; DIETMAR SAUPE.** *Image-Based Surface Compression,* September 2008